# EUROPEAN PATENT SPECIFICATION

(11) **EP 1 696 729 B1**
(45) Date of publication and mention of the grant of the patent: **04.07.2007**
(21) Application number: 04820804.5
(22) Date of filing: 23.11.2004
(51) Int. Cl.: A23B 7/005, A23B 7/16, A23L 1/22

(54) **METHOD FOR PRESERVATION OF VEGETABLE MATTER**
VERFAHREN ZUR KONSERVIERUNG VON PFLANZENMATERIAL
PROCEDE DE CONSERVATION D'UNE MATIERE VEGETALE

(30) Priority: 23.12.2003 EP 03079174
(43) Date of publication of application: 06.09.2006
(73) Proprietor: UNILEVER N.V., 3013 AL Rotterdam (NL); UNILEVER PLC, London, Greater London EC4P 4BQ (GB)
(72) Inventor: GIAVEDONI, Paola, Unilever R & D Vlaardingen, NL-3133 AT Vlaardingen (NL)
(74) Representative: Wurfbain, Gilles L.
(86) International application number: PCT/EP2004/013326
(87) International publication number: WO 2005/063031

(56) References cited:
- EP-A- 0 392 016
- EP-A- 0 396 810
- CH-A- 134 075
- FR-A- 2 628 943
- US-A- 5 417 998

## Description

### Field of the invention

The present invention relates to a method for preserving edible vegetable matter, particularly vegetables and herbs, which method consists of a heat treatment.

### Background of the invention

In the course of time several methods have been found which are suited for preserving vegetable matter. These methods comprise drying, heating, freezing, salting and storing the vegetable matter in a preserving liquid. Each method, however, has its pros and cons. When the preserved product is intended to be included in a meal kit which is meant for chilled display in a shop an attractive fresh appearance of the contents is important besides a good aroma. Then heating and storage in a preserving marinade type aqueous liquid are the best options. Such liquid, as described in the references below, often contains relatively high levels of salt, sugar and/or acid. While imparting a salty, sweet or sour aroma during subsequent storage is quite acceptable for some types of vegetables or fruits, this is not true for vegetables which are consumed after grilling or roasting. Particularly for the preservation of herbs which are meant for inclusion in said chilled meal kits, neither the use of those aqueous liquids, nor common drying or freeze drying processes forms an appearance sparing preservation method.

US 5925395 describes methods for preserving fresh vegetables wherein fresh vegetables are cut and exposed to a preserving aqueous solution comprising 0.1 - 10 wt.% of calcium ions and 0.1 - 30 wt.% of ascorbate ions or erythrobate ions. Storage without losing fresh aroma, appearance and crispiness is claimed for up to 10 days. This method relates to vegetables that apart from being cut have not been further processed, anyway have not been roasted or otherwise heated.

The fresh vegetables described in WO96/14760 are stored in a film, which contains a marinating agent, comprising vinegar, sugar, salt, flavourings and others. This method does not comprise vegetables that have been heat-treated.

Vegetables roasted in an oven are widely used for preparing certain food products, such as packed ready-to-eat sandwiches. For this application the heat-treated vegetables need a shelf-life during which time their appearance and aroma should closely resemble the appearance and aroma of vegetables immediately after the heat treatment. In WO 03/063600 a method is described where vegetables, after having been roasted, are submersed in a preserving aqueous marinade. This method allows prolonging the storage period during which the good aroma and appearance of particularly roasted vegetables is retained and also microbiological safety is ensured.
However, the method requires a specific marinade which can not be easily separated from the vegetables and which aroma may be not compatible with the desired final food composition.

EP-A-0 396 810 describes a method for the preservation of garlic by treating it with hot vegetable oil. The hot vegetable oil has a temperature of 100°C to 130°C.

### Summary of the invention

The present invention relates to a method as defined in claim 1 which is suited for preserving the typical aroma and appearance of vegetable matter during storage after a heat treatment. Aroma is herein defined as taste and flavour.

### Detailed Description

The present invention pertains to a method of preservation according to claim 1 comprising immersing vegetable matter in heated oil and subsequent storage under oil in a closed package. The method is useful because it does not substantially affects aroma and appearance of the treated matter.

The present stabilised heat-treated vegetable matter is particularly suited as an ingredient of meal kits which are meant for quickly providing a meal.

In the context of the present specification vegetable matter is understood to comprise edible plant material, particularly including vegetables, herbs, mushrooms and fruits in so far as these can bear the heat treatment mentioned in claim 1. Suitable vegetable matter for use in the invention comprises peppers, courgettes, aubergines, carrots, mushrooms and/or members of the botanical family of Allium such as onions and garlic, but preferably consists of one or more items selected from the group comprising herbs, peppers, vegetables, garlic and onions.

Herbs are selected preferably from the group comprising rosemary, parsley, basil, marjoram, oreganum, mint, thyme, bay, dill, mace, sage, sorrel, fennel and cress.

After an optional washing step the crude vegetable matter may be cut into pieces, slices or rings, preferably having a thickness of 0.4 - 1.5 cm, more preferably 0.5 - 1.0 cm. These are optionally covered with a film of an edible oil such as olive oil, sunflower oil or nut oil.

The method of the present invention is characterized in that the selected vegetable matter is relatively shortly immersed in an edible oil having a temperature of 140°C - 220°C, preferably 160°C - 220°C, for 5 seconds - 4 minutes Then the heated vegetable matter is removed from the oil, optionally cooled down and immediately put in a package together with such amount of edible oil that the vegetable matter during storage either is fully immersed in oil or at least remains covered with an layer of oil.

For heating preferably a vegetable oil is selected, such as one of the common oils used for deep frying, e.g. soybean oil, sunflower oil, arachide oil and, preferably, olive oil or mixtures of those oils. The same type of oil can be used for covering the vegetable matter during subsequent storage.

The optimum temperature and time for heating varies with the nature of the vegetable matter and also with the thickness of slices. Preferably, both duration and temperature of heating are chosen such that the appearance of the vegetable matter is the least adversely affected. The skilled man is able to select with some trial experiments suitable temperatures and times for obtaining the desired effect.

Some vegetable matter is so delicate that it can not bear the heating under the claimed conditions. For such matter the invented preservation method is not suited.

After the heating step the vegetable matter is put without delay together with adhering and/or added oil in a package, which then, preferably, is tightly sealed. Optionally further ingredients are added to the oil, e.g. suitable spices or other flavouring.
The atmosphere in the container may be substituted by a preserving atmosphere, using, for example, nitrogen, argon or helium.
Preferably a package material is used which is at least partially transparent, which allows the consumer to inspect the package contents. The invention also comprises a flexible and at least partially transparent package containing preserved vegetable matter which is obtained according to the method of the invention. A pouch made of polyethylene is a suitable package. Storage of the closed package under chilled conditions is recommended.

The vegetable matter contained in the package is selected and apportioned preferably such that it can be used as part of a meal kit. When preparing the meal the content of the package may be shortly heated, preferably when it is meant for use as a so-called soffritto in an Italian meal kit. In that case preferably the further ingredients necessary in combination as a soffritto are included in the package.

The benefit of the invention is that vegetable matter when covered with or submersed in oil after being exposed to a heat treatment according to the invention retains its attractive appearance and/or aroma. Without wishing to be bound by theory, the effect of the method is believed to be based on the quick partial or full removal of moisture from the vegetable matter. Moreover, the heat exposure destroys any microbial activity and inactivates any deteriorating enzyme. Therefore it is not necessary, but neither it is excluded, to add a preservation agent to the contents of the package. When it is tightly closed, also the addition of an anti-oxidant is redundant. The good aroma and appearance of the contents can be preserved for several weeks. Preferably the vegetable matter is kept at chilled conditions, e.g. at 2-10°C in a refrigirator.

### Examples and comparative experiments

For examples 1-6, a vegetable matter mixture was prepared having the following composition:
9 g red onion slices
5 g garlic slices

The vegetable matter mixture was fried in olive oil having a temperature indicated hereafter in table 1 (Oil temp.), and thereafter immersed in olive oil having room temperature. The appearance of the vegetable matter was checked after directly after preparation and after 24 hours.

The resulting mixtures of oil and vegetable matter were stored at 7°C for 48 days and then tested for microbiological stability. In the stability test, the following organisms were tested: entoro-bacteria, yeast, lactobacilli, spores, listeria, staphylococcus, bacillus and E. coli. Results are shown in table 1.

For examples 7-12, a vegetable matter mixture was prepared having the following composition the following composition:
3 g fresh thyme
3 g fresh rosemary

For comparative experiments A and B, the mixture as in examples 1-6 was immersed in olive oil heated to 85°C and 115°C respectively in a jar. The vegetable matter was not removed from the jar, but the filled jar was taken of the heat and allowed to cool down to room temperature. The apperance was tested after taking of the heat and after 24 hours. Microbiological stability was tested as in examples 1-12 after storage at 7°C for 48 days.

**Table 1: Results for preparations of vegetable matter.**

| Ex. | Oil temp. (°C) | Time (s) | Appearance | | Microbiological stability |
|---|---|---|---|---|---|
| | | | Time = 0 | After 24 hours | |
| 1 | 140 | 30 | Original separation of red in onion | Original separation of red in onion | OK |
| 2 | 140 | 60 | " | " | OK |
| 3 | 150 | 25 | " | " | OK |
| 4 | 160 | 21 | " | " | OK |
| 5 | 170 | 20 | " | " | OK |
| 7 | 200 | 15 | " | " | OK |
| 8 | 140 | 30 | Fresh green | Fresh green | OK |
| 9 | 150 | 25 | " | " | OK |
| 10 | 160 | 21 | " | " | OK |
| 11 | 170 | 16 | " | " | OK |
| 12 | 200 | 10 | " | " | OK |
| A | 85 | - | Water haze | Water haze and red colour migration in onion | Spoilage |
| B | 115 | - | Water haze | Water haze and red colour migration in onion | OK |

## Claims

1. Method of preserving edible vegetable matter comprising the steps,
- selecting vegetable matter to be preserved,
- immersing the selected vegetable matter in an edible oil having a temperature of 140°C - 220°C for 5 seconds - 4 minutes,
- removing the heated vegetable matter from the oil, and after an optional cooling step putting it into a package together with so much edible oil that the vegetable matter during storage is either immersed in the oil or covered with an oily layer.

2. Method according to claim 1, wherein the vegetable matter is immersed in edible oil having a temperature of 160°C - 220°C.

3. Method according to claim 1 or 2, **characterised in that** fresh vegetable matter is selected.

4. Method according to any of claims 1-3, **characterised in that** the vegetable matter consists of one or more items selected from the group consisting of herbs, peppers, vegetables, fruits, garlic and onions.

5. Method according to claim 4, **characterised in that** the herbs comprise rosemary, parsley, basil, marjoram, oreganum, mint, thyme, bay, dill, mace, sage, sorrel, fennel and cress.

6. Method according to any of claims 1-5, **characterised in that** both duration and temperature of heating are chosen such that the appearance of the vegetable matter is not adversely affected.

7. Method according any of claims 1-5**characterised in that** the vegetable matter after heating is stored while immersed in or covered by olive oil.

8. Method according any of claims 1-7, **characterised in that** the vegetable matter after heating is stored in a tightly closed package which is at least partially transparent.

9. Method according any of claims 1-8, **characterised in that** the vegetable matter in the package is selected and apportioned for use in a meal kit.

10. Method according to any of claims 1-9, **characterised in that** the package contains ingredients for a soffritto.

## Patentansprüche

1. Verfahren zum Konservieren von essbarem Pflanzenmaterial, umfassend die Schritte:
- Auswählen des zu konservierenden Pflanzenmaterials
- Eintauchen des ausgewählten Pflanzenmaterials in ein essbares Öl mit einer Temperatur von 140°C - 220°C für 5 Sekunden - 4 Minuten,
- Entfernen des erhitzten Pflanzenmaterials aus dem Öl und nach einem optionalen Kühlschritt es zusammen mit soviel essbarem Öl in eine Verpackung legen, dass das Pflanzenmaterial während Lagerung entweder in dem Öl eingetaucht oder mit einer öligen Schicht bedeckt ist.

2. Verfahren gemäß Anspruch 1, worin das Pflanzenmaterial in essbares Öl mit einer Temperatur von 160°C - 220°C eingetaucht wird.

3. Verfahren gemäß Anspruch 1 oder 2, **dadurch gekennzeichnet, dass** frisches Pflanzenmaterial ausgewählt wird.

4. Verfahren gemäß einem der Ansprüche 1-3, **dadurch gekennzeichnet, dass** das Pflanzenmaterial aus einem oder mehreren Artikeln besteht, ausgewählt aus der Gruppe bestehend aus Kräutern, Pfeffern, Gemüse, Früchten, Knoblauch und Zwiebeln.

5. Verfahren gemäß Anspruch 4, **dadurch gekennzeichnet, dass** die Kräuter Rosmarin, Petersilie, Basilikum, Majoran, Oregano, Minze, Thymian, Lorbeer, Dill, Muskatblüte, Salbei, Ampfer, Fenchel und Kresse umfassen.

6. Verfahren gemäß einem der Ansprüche 1-5, **dadurch gekennzeichnet, dass** sowohl Dauer, als auch Temperatur des Erhitzens so gewählt werden, dass die Erscheinung des Pflanzenmaterials nicht nachteilig beeinträchtigt wird.

7. Verfahren gemäß einem der Ansprüche 1-5, **dadurch gekennzeichnet, dass** das Pflanzenmaterial nach Erhitzen gelagert wird, während es in Olivenöl eingetaucht oder **dadurch** bedeckt ist.

8. Verfahren gemäß einem der Ansprüche 1-7, **dadurch gekennzeichnet, dass** das Pflanzenmaterial nach Erhitzen in einer dicht geschlossenen Verpackung gelagert wird, welche mindestens teilweise transparent ist.

9. Verfahren gemäß einem der Ansprüche 1-8, **dadurch gekennzeichnet, dass** das Pflanzenmaterial in der Verpackung zur Verwendung in einem Mahlzeiten-Kit ausgewählt und aufgeteilt.

10. Verfahren gemäß einem der Ansprüche 1-9, **dadurch gekennzeichnet, dass** die Verpackung Inhaltsstoffe für ein Soffritto enthält.

## Revendications

1. Procédé pour conserver des matières végétales comestibles, comprenant les étapes de :
- sélection des matières végétales devant être conservées,
- immersion des matières végétales sélectionnées dans une huile comestible à une température de 140°C à 220°C pendant 5 secondes à 4 minutes,
- retrait des matières végétales comestibles hors de l'huile, et, après une étape facultative de refroidissement, mise de celles-ci dans un emballage conjointement avec suffisamment d'huile comestible pour que les matières végétales durant le stockage soient immergées dans l'huile ou recouvertes d'une couche d'huile.

2. Procédé selon la revendication 1, dans lequel les matières végétales sont immergées dans de l'huile comestible à une température de 160°C à 220°C.

3. Procédé selon la revendication 1 ou 2, **caractérisé en ce que** des matières végétales fraîches sont sélectionnées.

4. Procédé selon l'une quelconque des revendications 1 à 3, **caractérisé en ce que** les matières végétales sont constituées d'un ou plusieurs articles choisis dans le groupe constitué par les fines herbes, les piments, les légumes, les fruits, l'ail et les oignons.

5. Procédé selon la revendication 4, **caractérisé en ce que** les fines herbes comprennent le romarin, le persil, le basilic, la marjolaine, l'origan, la menthe, le thym, le laurier, l'aneth, la muscade, la sauge, l'oseille, le fenouil et le cresson.

6. Procédé selon l'une quelconque des revendications 1 à 5, **caractérisé en ce que** tant la durée que la température du chauffage sont choisies de façon que l'aspect des matières végétales ne soit pas négativement affecté.

7. Procédé selon l'une quelconque des revendications 1 à 5, **caractérisé en ce que** les matières végétales, après chauffage, sont stockées en étant immergées dans de l'huile d'olive ou recouvertes d'huile d'olive.

8. Procédé selon l'une quelconque des revendications 1 à 7, **caractérisé en ce que** les matières végétales, après chauffages, sont stockées dans un emballage hermétiquement fermé qui est au moins partiellement transparent.

9. Procédé selon l'une quelconque des revendications 1 à 8, **caractérisé en ce que** les matières végétales dans l'emballage sont sélectionnées et proportionnées pour une utilisation dans un aliment préparé.

10. Procédé selon l'une quelconque des revendications 1 à 9, **caractérisé en ce que** l'emballage contient des ingrédients pour un soffritto.
